# EUROPEAN PATENT APPLICATION

(11) **EP 4 592 842 A1**
(43) Date of publication of application: **30.07.2025**
(21) Application number: 23867424.6
(22) Date of filing: 15.09.2023
(51) Int. Cl.: G06F 9/48

(54) **METHOD FOR PROCESSING PLURALITY OF TASKS, PROCESSING DEVICE, AND HETEROGENEOUS COMPUTING SYSTEM**

(30) Priority: 22.09.2022 CN 202211156377
(71) Applicant: Moore Threads Technology Co., Ltd., Beijing 100036 (CN)
(72) Inventor: CHEN, Lei, Beijing 100036 (CN); WEN, Si, Beijing 100036 (CN); LI, Kai, Beijing 100036 (CN); ZHANG, Yubo, Beijing 100036 (CN)
(74) Representative: Lavoix
(86) International application number: PCT/CN2023/119199
(87) International publication number: WO 2024/061135

(57) **Abstract**

The present application relates to the technical field of computers, and discloses a method for processing a plurality of tasks, a processing device, and a heterogeneous computing system. The method comprises: obtaining task description information for a task, the task description information comprising a dependency information identifier and a dependent information identifier, the dependency information identifier indicating the number of a first type of tasks associated with the task, and the dependent information identifier at least indicating whether a second type of task associated with the task exists in the plurality of tasks; in response to the task execution ending, updating the dependency information identifier of the second type of task associated with the task, so as to determine from the second type of task associated with the task any tasks to be executed which no longer directly depend on any task; adding the tasks to be executed into a tasks to be executed queue; and executing the tasks to be executed located in the tasks to be executed queue.

## Description

### CROSS-REFERENCE TO RELATED APPLICATIONS

The application is based on and claims priority to Chinese Patent Application No. 202211156377.7 filed on September 22, 2022 and entitled "METHOD FOR PROCESSING MULTIPLE TASKS AND PROCESSING DEVICE, AND HETEROGENEOUS COMPUTING SYSTEM", the entire contents of which are incorporated herein by reference in its entirety.

### TECHNICAL FIELD

The disclosure relates to the field of computer technologies, and to a method for processing multiple tasks, a processing device for processing multiple tasks, and a heterogeneous computing system.

### BACKGROUND

With the rapid development of semiconductor technologies and information technologies, various forms of processors have emerged to meet the increasingly abundant computing needs. In addition to traditional Central Processing Units (CPUs) which have a strong general-purpose computing capability, a variety of processors with enhanced specialized computing capabilities, including Digital Signal Processors (DSPs), Graphics Processing Units (GPUs), Field Programmable Gate Arrays (FPGAs), and Neural Processing Units (NPUs), have been widely used. Accordingly, the computing performance of computers has been continuously improved and developed from isomorphic computing to heterogeneous computing. These processors cooperate with the central processor to realize heterogeneous computing. The model of the hardware system for general heterogeneous computing is a "host-device" model, in which a Central Processing Unit is used as the host and the device may include the above-mentioned DSP, GPU, FPGA, NPU, or the like. The host distributes tasks and data related to the tasks to the device, and the device completes the specific computing tasks and returns the results obtained by executing the tasks to the host.

### SUMMARY

An embodiment of the disclosure provides a method for processing multiple tasks, including the following operations. Task description information of each of the multiple tasks is obtained. The task description information includes a depending information identifier and a depended information identifier, the depending information identifier indicates a number of first type tasks associated with the task in the multiple tasks, the depended information identifier indicates at least whether second type tasks associated with the task exist in the multiple tasks, execution of the task directly depends on the first type task, and execution of the second type task directly depends on the task. In response to an end of the execution of the task, a depending information identifier of the second type task associated with the task is updated based on a depended information identifier of the task, to determine a to-be-executed task, which does not directly depend on any one of the multiple tasks, from the second type tasks associated with the task based on the updated depending information identifier. The to-be-executed task is added to a to-be-executed task queue. The to-be-executed task in the to-be-executed task queue is executed.

According to some embodiments of the disclosure, the method may further include the following operation. In response to the obtained multiple tasks including a non-dependent task, the non-dependent task is added to the to-be-executed task queue, herein a depending information identifier of the non-dependent task indicates that a number of first type tasks associated with the non-dependent task is zero.

According to some embodiments of the disclosure, the operation of updating, in response to the end of the execution of the task, the depending information identifier of the second type task associated with the task based on the depended information identifier of the task, to determine the to-be-executed task, which does not directly depend on any one of the multiple tasks, from the second type tasks associated with the task based on the updated depending information identifier may include the following operations. In response to the end of the execution of the task, a value of the depending information identifier of each of the second type tasks associated with the task is changed by a same amount, to obtain an updated depending information identifier of each of the second type tasks associated with the task. A second type task is determined as the to-be-executed task, herein the updated depending information identifier of the second type task indicates that a number of first type tasks associated with the second type task is zero.

According to some embodiments of the disclosure, the operation of adding the to-be-executed task to the to-be-executed task queue may include the following operation. Start address information of task description information of the to-be-executed task is stored into a first-in-first-out memory.

According to some embodiments of the disclosure, the operation of adding the to-be-executed task to the to-be-executed task queue may include the following operation. Start address information of task description information of the to-be-executed task and a task priority identifier of the to-be-executed task are stored into a first memory.

According to some embodiments of the disclosure, each of the multiple tasks may further include task instruction information for indicating specific operation content of the task, the task description information may further include command parameter information, and the command parameter information represents a condition required for initiating and executing task instruction information of the task. The operation of executing the to-be-executed task in the to-be-executed task queue may include the following operations. Command parameter information in the task description information of the to-be-executed task is obtained according to the start address information of the task description information of the to-be-executed task. The command parameter information of the to-be-executed task is stored into a second memory, to parse the command parameter information of the to-be-executed task.

According to some embodiments of the disclosure, the operation of obtaining the command parameter information in the task description information of the to-be-executed task according to the start address information of the task description information of the to-be-executed task may include the following operation. In response to the first memory storing start address information of task description information of at least one to-be-executed task and available space exists in the second memory, command parameter information in the task description information of the at least one to-be-executed task is obtained according to the start address information of the task description information of the at least one to-be-executed task. The operation of storing the command parameter information of the to-be-executed task into the second memory, to parse the command parameter information of the to-be-executed task may include the following operation. The command parameter information of the at least one to-be-executed task is stored into the second memory, to parse the command parameter information of the at least one to-be-executed task.

According to some embodiments of the disclosure, each of the multiple tasks may further include task instruction information for indicating specific operation content of the task, the task description information may further include command parameter information, and the command parameter information represents a condition required for initiating and executing task instruction information of the task. The operation of executing to-be-executed task in the to-be-executed task queue may include the following operations. A high priority to-be-executed task with a highest priority is determined from the to-be-executed task queue based on a priority identifier of the to-be-executed task. Command parameter information in task description information of the high priority to-be-executed execution task is obtained based on start address information of the task description information of the high priority to-be-executed execution task. The command parameter information in the task description information of the high priority to-be-executed task is stored into a second memory, to parse the command parameter information in the task description information of the high priority to-be-executed task.

According to some embodiments of the disclosure, each of the multiple tasks may further include task instruction information for indicating specific operation content of the task, the task description information may further include command parameter information, and the command parameter information represents a condition required for initiating and executing task instruction information of the task. The operation of executing to-be-executed task in the to-be-executed task queue may include the following operations. A high priority to-be-executed task with a highest priority is determined from the to-be-executed task queue based on a priority identifier of the to-be-executed task. A task priority identifier of the high priority to-be-executed task is compared with a task priority identifier of another task other than the to-be-executed task queue. In response to a priority of the high priority to-be-executed task being higher than a priority of the another task, command parameter information in task description information of the high priority to-be-executed task is stored into a second memory, to parse the command parameter information in the task description information of the high priority to-be-executed task.

According to some embodiments of the disclosure, the operation of executing the to-be-executed task in the to-be-executed task queue may further include the following operation. In response to the priority of the high priority to-be-executed task being higher than the priority of the another task and a depending information identifier in task description information of the another task indicating that a number of first type tasks associated with the another task is zero, start address information of the task description information of the another task is stored into the first memory.

According to some embodiments of the disclosure, the operation of executing the to-be-executed task in the to-be-executed task queue may further include the following operation. In response to the priority of the high priority to-be-executed task being lower than the priority of the another task and a depending information identifier in task description information of the another task indicating that a number of first type tasks associated with the another task is zero, command parameter information of the task description information of the another task is stored into the second memory, to parse the command parameter information of the task description information of the another task.

According to some embodiments of the disclosure, the operation of executing the to-be-executed task in the to-be-executed task queue may include the following operation. In response to the processing device having available computing resources for executing tasks, at least one to-be-executed task is obtained from the to-be-executed task queue, and the at least one to-be-executed task is allocated to the available computing resource.

According to some embodiments of the disclosure, the multiple tasks may include two task sets. Tasks in one of the two task sets have dependencies that form a first task diagram, tasks in another one of the two task sets have dependencies that form a second task diagram, and the first task diagram is independent from the second task diagram.

According to some embodiments of the disclosure, the depended information identifier may include a first identifier and a second identifier. The first identifier indicates whether second type tasks associated with the task exist in the multiple tasks, and the second identifier indicates start address information of task description information of the second type task associated with the task.

Another embodiment of the disclosure provides a processing device for processing multiple tasks. Each of the multiple tasks includes task description information, the task description information includes a depending information identifier and a depended information identifier, the depending information identifier indicates a number of first type tasks associated with the task in the multiple tasks, the depended information identifier indicates at least whether second type tasks associated with the task exist in the multiple tasks, execution of the task directly depends on the first type task, and execution of the second type task directly depends on the task. The processing device includes a to-be-executed task determination unit, a to-be-executed task queue storage unit and a task execution unit. The to-be-executed task determination unit is configured to update, in response to an end of the execution of each of the multiple tasks, a depending information identifier of the second type task associated with the task based on a depended information identifier of the task, to determine a to-be-executed task, which does not directly depend on any of the multiple tasks, from the second type tasks associated with the task based on the updated depending information identifier. The to-be-executed task queue storage unit is configured to store a to-be-executed task queue. The task execution unit is configured to execute a to-be-executed task in the to-be-executed task queue.

According to some embodiments of the disclosure, the to-be-executed task determination unit may include an adder or a subtractor. The adder or the subtractor is configured to change, in response to the end of the execution of the task, a value of the depending information identifier of each of the second type tasks associated with the task by a same amount, to obtain an updated depending information identifier of each of the second type tasks associated with the task. The to-be-executed task determination unit may be configured to determine a second type task as the to-be-executed task, herein the updated depending information identifier of the second type task indicates that a number of first type tasks associated with the second type task is zero.

According to some embodiments of the disclosure, the to-be-executed task queue storage unit may include a first-in-first-out memory. The to-be-executed task determination unit may be configured to send start address information of task description information of the to-be-executed task to the first-in-first-out memory in case of determining the to-be-executed task.

According to some embodiments of the disclosure, the task description information may further include a task priority identifier. The to-be-executed task queue storage unit may include a first storage unit. The to-be-executed task determination unit may be configured to send start address information of task description information of the to-be-executed task and a task priority identifier of the to-be-executed task to the first storage unit in case of determining the to-be-executed task.

According to some embodiments of the disclosure, each of the multiple tasks may further include task instruction information for indicating specific operation content of the task, the task description information of each of the multiple tasks may further include command parameter information, and the command parameter information represents a condition required for initiating and executing task instruction information of the task. The to-be-executed task queue storage unit may further include a second storage unit. The second storage unit is configured to store command parameter information of the to-be-executed task, to parse the command parameter information of the to-be-executed task.

According to some embodiments of the disclosure, the to-be-executed task queue storage unit may further include a first priority determination unit. The first priority determination unit is configured to determine a high priority to-be-executed task with a highest priority from the to-be-executed task queue based on a priority identifier of the to-be-executed task. The second storage unit may be configured to store, in response to the first priority determination unit determining the high priority to-be-executed task, command parameter information in task description information of the high priority to-be-executed task, to parse the command parameter information in the task description information of the high priority to-be-executed task.

According to some embodiments of the disclosure, the processing device may include a second priority determination unit. The second priority determination unit is configured to compare a task priority identifier of the high priority to-be-executed task with a task priority identifier of another task other than the to-be-executed task queue. The second storage unit may be configured to store, in response to a priority of the high priority to-be-executed task being higher than a priority of the another task, the command parameter information in the task description information of the high priority to-be-executed task, to parse the command parameter information in the task description information of the high priority to-be-executed task.

According to some embodiments of the disclosure, the first storage unit may further be configured to store, in response to the priority of the high priority to-be-executed task being higher than the priority of the another task and a depending information identifier in task description information of the another task indicating that a number of first type tasks associated with the another task is zero, start address information of the task description information of the another task.

According to some embodiments of the disclosure, the second storage unit may further be configured to store, in response to the priority of the high priority to-be-executed task being lower than the priority of the another task and a depending information identifier in task description information of the another task indicating that a number of first type tasks associated with the another task is zero, command parameter information of the task description information of the another task, to parse the command parameter information of the task description information of the another task.

According to some embodiments of the disclosure, the processing device may further include a third storage unit. The third storage unit is configured to store task description information of the second type task associated with the task.

Another embodiment of the disclosure provides a computer storage medium having stored thereon computer-executable instructions that when executed by a processor, implement the method for processing multiple tasks.

Another embodiment of the disclosure provides a computer program including computer-readable codes, and when the computer-readable codes are running in an electronic device, a processor in the electronic device implements the method for processing multiple tasks.

Another embodiment of the disclosure provides a heterogeneous computing system including a first processing device and a second processing device. The first processing device and the second processing device cooperate with each other to process multiple tasks. Each of the multiple tasks includes task description information, the task description information includes a depending information identifier and a depended information identifier, the depending information identifier indicates a number of first type tasks associated with the task in the multiple tasks, the depended information identifier indicates at least whether second type tasks associated with the task exist in the multiple tasks, execution of the task directly depends on the first type task, and execution of the second type task directly depends on the task. The first processing device is configured to send the multiple tasks to the second processing device, to cause the second processing device to execute the multiple tasks. The second processing device includes a to-be-executed task determination unit, a to-be-executed task queue storage unit and a task execution unit. The to-be-executed task determination unit is configured to update, in response to an end of the execution of each of the multiple tasks, a depending information identifier of the second type task associated with the task based on a depended information identifier of the task, to determine a to-be-executed task, which does not directly depend on any of the multiple tasks, from the second type tasks associated with the task based on the updated depending information identifier. The to-be-executed task queue storage unit is configured to store a to-be-executed task queue. The task execution unit is configured to execute a to-be-executed task in the to-be-executed task queue.

According to some embodiments of the disclosure, the first processing device may include a Central Processing Unit, and the second processing device may include at least one of a Digital Signal Processor, a Graphics Processing Unit, a Field Programmable Gate Array, or a Neural Network Processor.

Some embodiments of the disclosure are summarized above, and other different embodiments may be obtained based on a combination of some embodiments and a combination of features in different embodiments, which also fall within the scope of protection of the disclosure.

### BRIEF DESCRIPTION OF THE DRAWINGS

Embodiments of the disclosure will be described in detail and with reference to the drawings. It can be understood that the processing device and the heterogeneous computing system shown in the drawings only schematically represent a portion of the structure of the processing device and the heterogeneous computing system, which is related to the technical solution described in the embodiments of the disclosure, and do not represent an actual product structure.
FIG. 1 schematically illustrates information interaction between a host and a device in a heterogeneous computing system.
FIG. 2 schematically illustrates general content of task information of a single task according to an embodiment of the disclosure.
FIG. 3 schematically illustrates an example of a task diagram including multiple tasks.
FIG. 4 illustrates operations of a method for processing multiple tasks according to an embodiment of the disclosure.
FIG. 5 illustrates an example of a time sequence for executing task A, task C, and task D in FIG. 3 by applying a conventional task processing method.
FIG. 6 illustrates an example of a time sequence for executing task A, task C, and task D in FIG. 3 by applying a method for processing multiple tasks provided by embodiments of the disclosure.
FIG. 7 illustrate a task description information diagram obtained by defining the tasks shown in FIG. 3 in a manner of defining task description information in a method for processing multiple tasks provided by an embodiment of the disclosure.
FIG. 8 illustrate describing the task diagram shown in FIG. 3 based on the task description information of the various tasks shown in FIG. 7.
FIG. 9 illustrates a structure block diagram of a processing device according to an embodiment of the disclosure.
FIG. 10 illustrates an example of a heterogeneous computing system according to an embodiment of the disclosure.

### DETAILED DESCRIPTION

The following description provides particular details of various embodiments of the disclosure, so that those skilled in the art may fully understand and implement the various embodiments of the disclosure. In some cases, the disclosure does not illustrate or describe in detail some structures or features that are well known in the art, in order to avoid these unnecessary descriptions obscuring the description of embodiments of the disclosure. The technical solution of the disclosure may be embodied in various different forms and purposes and should not be limited to the embodiments set forth herein. These embodiments are provided to make the technical solution of the disclosure clear and complete, but the described embodiments do not limit the scope of protection of the disclosure.

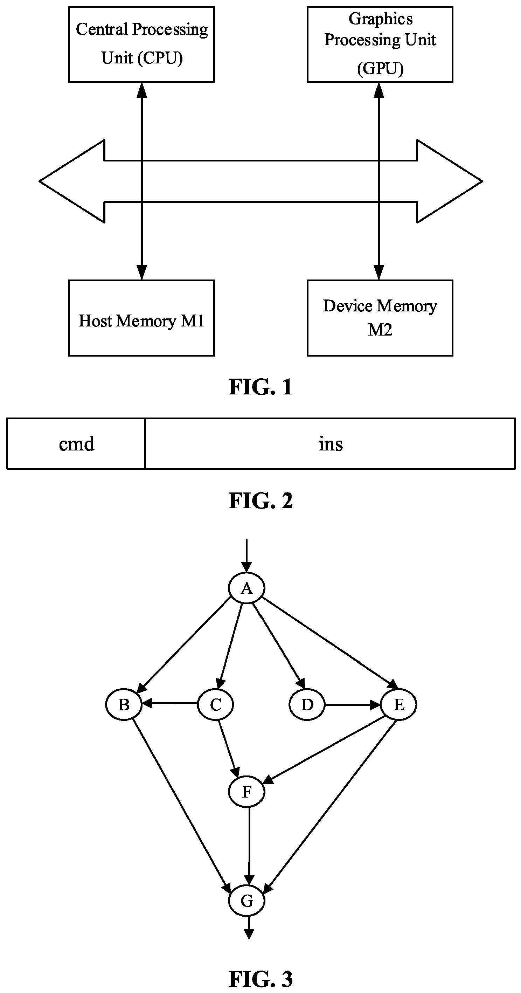

FIG. 1 schematically illustrates interaction between a host and a device in a heterogeneous computing system. An example in which the host is a Central Processing Unit (CPU) and the device is a Graphics Processing Unit (GPU) is illustrated in FIG. 1. The host CPU may store task information in a host memory M1 and subsequently copy the task information to a device memory M2 of the device GPU. When the device GPU receives a start command for a task from the host CPU, a specific task execution unit in the device GPU obtains instruction information and data related to the task from the device memory M2, and stores the result obtained by executing the task in the device memory M2. The device GPU may transmit the result stored in the device memory M2 to the host CPU.

The "task" herein refers to an operation, which is allocated by a host to a device and is to be completed by the device, in a heterogeneous computing system including the host and the device, and there is no restriction on the specific form or type of the task. Examples of the task include, but are not limited to, any form of data computation, image rendering, or the like. FIG. 2 schematically illustrates general content of task information of a single task. As shown in FIG. 2, task information of a task may include task description information cmd and task instruction information ins. As can be known by those skilled in the art, the task description information cmd generally includes command parameter information required for the device to execute the task, and the command parameter information represents a condition required for initiating and executing task instruction information of the task. In the process that the device executes the task sent from the host, the device parses the command parameter information to make necessary preparations for executing the task instruction information ins of the task. For example, the computing resources required for executing the instruction information ins may be known based on the parsing of the command parameter information, and then the corresponding computing resources (hardware resources) in the device may execute the specific operation content indicated by the task instruction information ins. The command parameter information may include the address of the computing resources required by the device to execute the task (e.g., an arithmetic logic unit (ALU)). The task instruction information ins indicates the specific operation content of the task, for example, the task instruction information ins includes specific arithmetic instructions for the related data.

Referring to FIGS. 1 and 2, in order to complete a task, the host CPU needs to store the task information in the host memory M1 of the host. The task information is copied or transferred from the host memory M1 to the device memory M2 of the device GPU. When the task is initiated, the device GPU parses the command parameter information in the task description information cmd in the task information stored in the device memory M2 and performs a specific operation according to the task instruction information ins stored in the device memory M2. Thus, the time for the host CPU and the device GPU to complete a task includes the time for transferring the task information from the host memory M1 of the host to the device memory M2 of the device, and the time for the device GPU to execute the task instruction information ins. If the time for transferring the task information to the device memory M2 is marked as T0 and the time for the device GPU to complete the operation indicated by the task instruction information ins is marked as T1, the time required for completing a task includes at least the sum of the above time T0 and time T1. In the case where multiple tasks are required to be completed, the time required for completing each task at least includes two periods of time similar to the aforementioned time T0 and time T1. In other words, at the end of one task, transmission of the task description information cmd and the task instruction information ins of the next task is started, and after completion of parsing the command parameter information in the task description information cmd of the next task, the operation indicated by the task instruction information ins of the next task is then performed.

The inventor of the disclosure realizes that this way of processing tasks leads to lower efficiency of task completion and also reduces the utilization of the resources of the device in the heterogeneous computing system. The problem is more prominent in the case of completing multiple tasks that have interdependencies on each other.

If at least some of the tasks of multiple tasks have dependencies on each other, it may be considered that the at least some of the tasks constitute a task diagram. FIG. 3 schematically illustrates a task diagram including 7 tasks A to G. In the task diagram, task A does not depend on other tasks, and task A may be executed first. All of the execution of tasks B, C, D and E require the execution result of task A, that is, tasks B, C, D and E directly depend on task A. Moreover, tasks B and E also require the execution results of tasks C and D, respectively, that is, task B directly depends on task A and task C, and task E directly depends on task A and task D. Similarly, task F directly depends on task C and task E, and task G directly depends on task B, task E, and task F. After the completion of task G, the execution of the overall task corresponding to the task diagram including 7 tasks A to G is completed, and the execution result of task G is transmitted to the host. Here, the term "directly depend on" is used to describe the association of two tasks in a task diagram, that is, the execution of one of the two tasks is required to wait for the execution result of the other task. Here, for a certain task of multiple tasks, a task, on which the execution of the task directly depends, is referred to as a first type task associated with the task, that is, the execution of the task requires the execution result of the first type task. A task whose execution requires the execution result of the task is referred to as a second type task associated with the task, that is, the second type task directly depends on the task. For example, for task B shown in FIG. 3, task B directly depends on task A and task C. In addition, task G may be executed only when the execution result of task B is obtained. Therefore, the first type tasks associated with task B include task A and task C, and the second type tasks associated with task B include task G.

According to the task diagram shown in FIG. 3, the first type tasks and the second type tasks associated with tasks A to G may be shown in Table 1 as follows.

**Table 1**

| Tasks | First Type Tasks | Second Type Tasks |
|---|---|---|
| A | None | B, C, D, E |
| B | A, C | G |
| C | A | F |
| D | A | E |
| E | A, D | F, G |
| F | C, E | G |
| G | B, E, F | None |

If a conventional method is used to process multiple tasks as shown in FIG. 3, the host is required to transmit the task information related to each of the 7 tasks A to G to the device at different times, and further, the transmission of the task information of a certain task is required to wait for the end of the execution of the first type tasks associated with the task. As a result, the overall task completion efficiency is low, and a large amount of hardware resources in the device are not fully utilized.

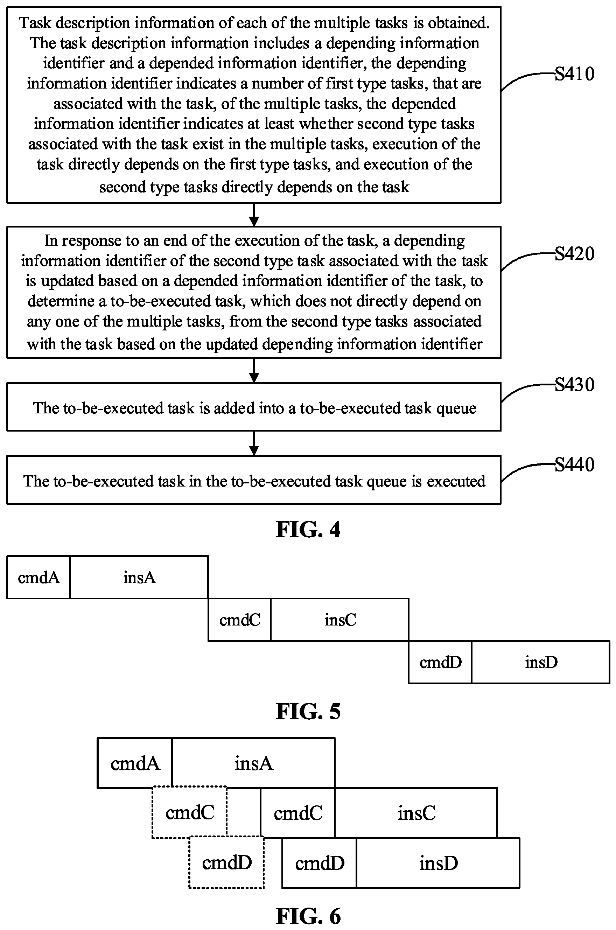

Embodiments of the disclosure provide a method for processing multiple tasks, to improve the overall efficiency of task completion and to improve the resource utilization of the device. FIG. 4 illustrates a method for processing multiple tasks according to the embodiments of the disclosure. As shown in FIG. 4, the method includes the following operations. In operation S410, task description information of each of the multiple tasks is obtained. The task description information includes a depending information identifier and a depended information identifier, the depending information identifier indicates a number of first type tasks associated with the task in the multiple tasks, the depended information identifier indicates at least whether second type tasks associated with the task exist in the multiple tasks, execution of the task directly depends on the first type task, and execution of the second type task directly depends on the task. In operation S420, in response to an end of the execution of the task, a depending information identifier of the second type task associated with the task is updated based on a depended information identifier of the task, to determine a to-be-executed task, which does not directly depend on any one of the multiple tasks, from the second type tasks associated with the task based on the updated depending information identifier. In operation S430, the to-be-executed task is added to a to-be-executed task queue. In operation S440, the to-be-executed task in the to-be-executed task queue is executed.

In the operation S410, a device such as a GPU may obtain or receive the task description information of each of the multiple tasks. Similar to conventional task **description** information, the task description information may include command parameter information required for the device to execute the task, and the command parameter information represents a condition required for initiating and executing the task instruction information of the task. The processing device may parse the command parameter information to make necessary preparations for executing the task instruction information of the task. A command parameter information parsing start identifier, a command parameter information parsing end identifier, and a command parameter information loading identifier may be set in the task description information. As described above, necessary preparations may be made for executing the task instruction information of the task by parsing the command parameter information, for example, computing resources required for completing the operation indicated by the task instruction information (such as the arithmetic logic unit (ALU) of the GPU), and further, some initial data may be prepared for completing the operation indicated by the task instruction information. However, according to the embodiments of the disclosure, the task description information further includes a depending information identifier and a depended information identifier. In the following, the task description information described in the embodiments of the disclosure is illustrated by way of example. For a task, kernel, the task description information, kernelcmd, may include the structure shown as follows.

```
structure kernelcmd
  {
  int32_t lockcounter;
  uint32_t startcmd;
  uint32_t launchcmd
  uint64 _t haspendingkernel;
  uint64 _t pendingkernelCmdAddr;
  uint32_t endcmd
```

The depending information identifier described above is denoted as lockcounter, which indicates the number of the first type tasks associated with the current task, and the depending information identifier lockcounter may be a signed value. For example, in one example, a negative lockcounter indicates that there are first type tasks associated with the current task, and the absolute value of lockcounter corresponds to the number of the first type tasks associated with the current task. Accordingly, the smaller lockcounter is, the greater the number of the first type tasks associated with the current task is. A case where lockcounter is 0 indicates that there are no first type tasks associated with the current task, that is, the execution of the current task does not directly depend on other tasks, and parameter parsing related to the task may be initiated. In the embodiments of the disclosure, the depending information identifier lockcounter is not a constant value, but a value that is changeable with the execution of other tasks. In other examples, it may be understood that a positive depending information identifier lockcounter indicates that there are first type tasks associated with the current task, and the larger lockcounter is, the greater the number of the first type tasks associated with the current task is. Similarly, a case where lockcounter is 0 indicates that the execution of the current task does not directly depend on other tasks. The depended information identifier in the task description information indicates at least whether second type tasks associated with the task exist in the multiple tasks. For example, the depended information identifier may include information about whether there are second type tasks associated with the task. In one embodiment, in the case where there are second type tasks associated with the current task, the depended information identifier may further include related information of the second type task associated with the current task. For example, in the above example, the depended information identifier includes a first identifier haspendingkernel and a second identifier pendingkernelCmdAddr. The first identifier haspendingkernel indicates whether second type tasks associated with the task exist in the multiple tasks, and the second identifier pendingkernelCmdAddr indicates the start address information of the task description information of the second type tasks associated with the current task. The second type task associated with the current task directly depends on the current task, and the execution of the second type task associated with the current task may start only when the execution of the current task is completed. In the above example, the structure of the task description information kernelcmd further includes a command parameter information parsing start identifier startcmd, a command parameter information parsing end identifier endcmd, and a command parameter information loading identifier launchcmd. Running the command parameter information loading identifier launchcmd means making specific preparations for the execution of the task instruction information, for example, allocating computing resources (such as an ALU), initial data, or the like, which are indicated by the command parameter information, for the execution of the task instruction information. Correspondingly, the command parameter information may include information regarding the total computing resources required for completing the current task. In some embodiments, a single task may be split into multiple task packages, each of the task packages may be further broken down into multiple threaded tasks, and each of the threaded tasks is executed by a corresponding individual computing resource in the device (for example, an arithmetic logic unit (ALU)), such that parallel processing of multiple threaded tasks may be realized. Multiple task packages may also be processed in parallel in the case where computing resources of the device are sufficient. In such case, the command parameter information may include information regarding the total computing resources required for executing the current task, and the computing resources required for executing each of the task packages.

In some embodiments, the above second identifier pendingkemelCmdAddr includes the start address information of the task description information of the second type task (pendingkemel) associated with the current task. An example of the structure of the second identifier pendingkemelCmdAddr is described as follows.

```
  Structure PendingKernelsCmdAddr
  {
  uint32_t startpending;
  uint64_t pendingkernels cmdaddr
  uint32_t endpending
```

Here, startpending and endpending represent the start and end of the task description information for identifying the second type task (pendingkemel), respectively, and the pendingkernels cmdaddr represents the start address of the task description information of each second type task.

In the operation S420, in response to an end of the execution of the task, a depending information identifier of the second type task associated with the task is updated based on a depended information identifier of the task, to determine a to-be-executed task, which does not directly depend on any one of the multiple tasks, from the second type tasks associated with the task based on the updated depending information identifier. That is, at the end of the execution of the current task, the value of the depending information identifier is updated according to the association of different tasks shown in the task diagram, in order to determine a to-be-executed task, which does not directly depend on any one of the multiple tasks, from the second type tasks associated with the current task. That is, some tasks that have been released from direct dependencies on other tasks are filtered out from the second type tasks associated with the current task, and determined as to-be-executed tasks. For example, for task A shown in FIG. 3, the second type tasks associated with task A includes task B, task C, task D, and task E. Task B directly depends on task A and task C, and the value of the depending information identifier in the task description information of task B is -2. Task C directly depends on task A, and the value of the depending information identifier in the task description information of task C is -1. Task D directly depends on task A, and the value of the depending information identifier in the task description information of task D is -1. Task E directly depends on task A and task D, and the value of the depending information identifier in the task description information of task E is -2. At the end of the execution of task A, the values of the depending information identifiers in the task description information of task B, task C, task D, and task E are updated to reflect the dynamic changes in the dependencies of tasks B, C, D and E on other tasks in real time. For example, at the end of the execution of task A, the value of the depending information identifier in the task description information of each of task B and task E is changed from -2 to -1, and the value of the depending information identifier in the task description information of each of task C and task D is changed from -1 to 0. In this example, the value of the depending information identifier of each of task C and task D is 0, and it means that each of task C and task D does not depend on any of the tasks at the end of the execution of task A. Therefore, task C and task D are determined as to-be-executed tasks.

Correspondingly, in the operation S430, the to-be-executed task (for example, task C and task D) is added to a to-be-executed task queue. In the operation S440, the to-be-executed task in the to-be-executed task queue is executed. For example, the address information of the task description information of the to-be-executed tasks may be stored centrally in the first memory, and then the command parameter information of the to-be-executed tasks may be obtained based on the address information of the task description information of the to-be-executed tasks.

As described above, with the conventional method for processing tasks, the time for the device to complete a task includes at least the time for receiving the task information of the task from the host memory and the time for executing the operation indicated by the task instruction information. In particular, in the case where the device is required to complete multiple tasks, the start of the execution of any of the tasks is required to wait for the end of the execution of another task, that is, each of the tasks is completed in a one-by-one serial processing manner. For example, for task A, task C, and task D in the task diagram shown in FIG. 3, since tasks C and D depend on task A, tasks C and D may be executed at the end of the execution of task A. The execution of one of tasks C and D cannot start until the end of the execution of the other of the two tasks, even though tasks C and D have no interdependence on each other. FIG. 5 illustrates an example of a time sequence for executing task A, task C, and task D in FIG. 3 by applying a conventional task processing method. As shown in FIG. 5, task A includes task description information cmdA and task instruction information insA, task C includes task description information cmdC and task instruction information insC, and task D includes task description information cmdD and task instruction information insD. At the end of the execution of task A, tasks C and D are executed sequentially, and task D is required to wait for the end of the execution of task C, even though the execution result of task C is not required to be provided to task D. The device in the heterogeneous computing system generally includes a large amount of computing resources that can perform parallel operations (for example, ALUs), and the device processing multiple tasks in a task-by-task serial processing manner results in a large amount of the computing resources of the device being in an idle state, and further results in a lower overall execution efficiency of the tasks.

FIG. 6 illustrates an example of a time sequence for processing task A, task C, and task D in FIG. 3 by applying a method for processing multiple tasks provided by the embodiments of the disclosure. Since the first type tasks associated with task C or task D only include task A, at the end of the execution of task A, task C and task D are determined as to-be-executed tasks, and the start addresses of the task description information of task C and task D are added to the to-be-executed task queue. The task description information of task C and task D may be obtained from the device memory according to the start addresses of the task description information of task C and task D, and thereby the command parameter information in the task description information of task C and task D may be parsed. At the end of the execution of task A, the computing resources of the device execute the specific operation indicated by the task instruction information of one of tasks C and task D. However, other computing resources of the device that are in an idle state may then start executing the specific operation indicated by the task instruction information of the other one of task C and task D. For example, in the example of FIG. 6, at the end of the execution of task A, one or more computing resources of the device then execute the specific operation indicated by the task instruction information of task C. In the case where other available computing resources exist in the device, such other available computing resources also start executing the specific operation indicated by the task instruction information of task D without having to wait for the end of the execution of task C. In this way, parallel processing of task C and task D may be realized, which enables efficient utilization of the computing resources of the device and improves the speed and efficiency of processing multiple tasks.

In the case of processing multiple tasks by applying the method for processing multiple tasks provided by the embodiments of the disclosure, the host may send the task information of the tasks, which have been prepared, to the device in a timely manner. Once the device determines the to-be-executed tasks, the device parses the command parameter information in the task description information of the to-be-executed task, and then executes the operation indicated by the task instruction information of the to-be-executed task. The parsing of the command parameter information in the task description information of the to-be-executed task may also be performed at an earlier time, for example, the parsing of the command parameter information in the task description information of the to-be-executed tasks C and D may be completed during the process of executing task A. That is, the parsing of the command parameter information in the task description information of the to-be-executed task and the execution of the specific operation indicated by the task instruction information of the to-be-executed task may be consecutive in time, or, the parsing of the command parameter information in the task description information of the to-be-executed task may be completed earlier than the execution of the specific operation indicated by the task instruction information of the to-be-executed task. Therefore, in the example of FIG. 6, the time sequence of the task description information cmdC and cmdD of task C and task D is shown in both dashed and solid lines.

It can be understood that, with the method for processing multiple tasks provided by the embodiments of the disclosure, when task C and task D are determined as to-be-executed tasks, task B and task E are not determined as to-be-executed tasks because task B and task E still directly depend on task C and task D, respectively, at this time. That is, the depending information identifier in the task description information of task B still indicates that there is a first type task associated with task B, that is, task C. The depending information identifier in the task description information of task E still indicates that there is a first type of task associated with task E, that is, task D. The start addresses of the task description information of task B and task E may be added to the to-be-executed task queue at the end of task C and task D, respectively. Thus, the storage space of the first memory in the device for storing the to-be-executed task queue may be saved.

In some embodiments, the above operation S420 may includes the following operations. In operation S420a, in response to the end of the execution of the task, a value of the depending information identifier of each of the second type tasks associated with the task is changed by a same amount, to obtain an updated depending information identifier of each of the second type tasks associated with the task. In operation S420b, a second type task is determined as the to-be-executed task, herein the updated depending information identifier of the second type task indicates that a number of first type tasks associated with the second type task is zero. For example, for the task diagram shown in FIG. 3, the second type tasks associated with task A include tasks B, C, D and E. The initial values of the depending information identifiers in the task description information of tasks B, C, D and E are -2, -1, -1, and -2, respectively. At the end of the execution of task A, an add one operation is performed on the initial values of the depending information identifiers of tasks B, C, D and E, respectively, and accordingly, the values of the updated depending information identifiers of tasks B, C, D and E are -1, 0, 0, and -1, respectively. After that, the second type task (that is, task C and task D) is determined as the to-be-executed task, herein the updated depending information identifier of the second type task indicates that a number of first type tasks associated with the second type task is zero. The initial values of the depending information identifiers in the task description information of tasks B, C, D and E and the "add one operation" described above are only exemplary illustration. Other initial values of the depending information identifiers of tasks B, C, D and E may be set according to the specifics of the first type tasks with which tasks B, C, D and E are associated, and at the end of the execution of task A, other operations may be performed on the initial values of the depending information identifiers of tasks B, C, D and E, respectively, as long as the initial values of the depending information identifiers and the values of the updated depending information identifiers of tasks B, C, D and E may correctly reflect changes in the number of the first type tasks with which tasks B, C, D and E are associated. For example, the initial values of the depending information identifiers in the task description information of tasks B, C, D and E may be positive respectively, and at the end of the execution of task A, a subtraction operation is performed on the initial values of the depending information identifiers of tasks B, C, D and E, respectively.

According to some embodiments of the disclosure, the above method for processing multiple tasks further includes the following operation. In response to the obtained multiple tasks including a non-dependent task, the non-dependent task is added to the to-be-executed task queue, herein a depending information identifier of the non-dependent task indicates that a number of first type tasks associated with the non-dependent task is zero. The commonality between the non-dependent task mentioned herein and the aforementioned to-be-executed task is that the depending information identifier of the task indicates that a number of first type tasks associated with the task is zero, that is, neither the non-dependent task nor the to-be-executed task depends on any other task. However, the depending information identifier in the task description information of the non-dependent task has not been updated, but is in a state of not depending on any other task when it is obtained by the processing device. At this time, the non-dependent task may be added to the to-be-executed task queue.

In some embodiments, the above operation S430, that is, the operation of adding the to-be-executed task to the to-be-executed task queue, includes the following operation. Start address information of task description information of the to-be-executed task is stored into a first-in-first-out (FIFO) memory, to form the to-be-executed task queue. In such case, the start address information of the task description information of the to-be-executed task may be output from the FIFO memory according to the order of being released from direct dependencies on other tasks of each to-be-executed task in the to-be-executed task queue (that is, the to-be-executed task that is added to the to-be-executed task queue first will be output from the FIFO memory first). The command parameter information in the task description information of each to-be-executed task may be obtained from the device memory based on the start address information, and then the parsing of the command parameter information and the specific operation indicated by the task instruction information may be completed. Taking FIG. 6 as an example again, for the example of the time sequence shown in FIG. 6, it may also be considered that task C is released from direct dependencies on other tasks before task D.

According to another embodiment of the disclosure, the task description information of each task further includes a task priority identifier. The above operation S430, that is, the operation of adding the to-be-executed task to the to-be-executed task queue, includes the following operation. Start address information of task description information of the to-be-executed task and a task priority identifier of the to-be-executed task are stored into a first memory. In such case, the first memory may not be a first-in-first-out memory, but a conventional buffer. At this time, an exemplary structure of the task description information kernelcmd may be as follows.

```
  structure kernelcmd
  {
  int32_t lockcounter;
  uint32_t priority;
  uint32_t startcmd;
  uint32_t launchcmd
  uint64 _t haspendingkernel;
  uint64_t pendingkemelCmdAddr;
  uint32_t endcmd
```

The task priority identifier priority is an unsigned value that indicates the priority of the current task among all the tasks of the task diagram. Thus, different values of the task priority identifier priority mean different priorities of different tasks, and for two tasks which do not involve an associated first type task, the task with the higher priority of the two tasks will be executed first.

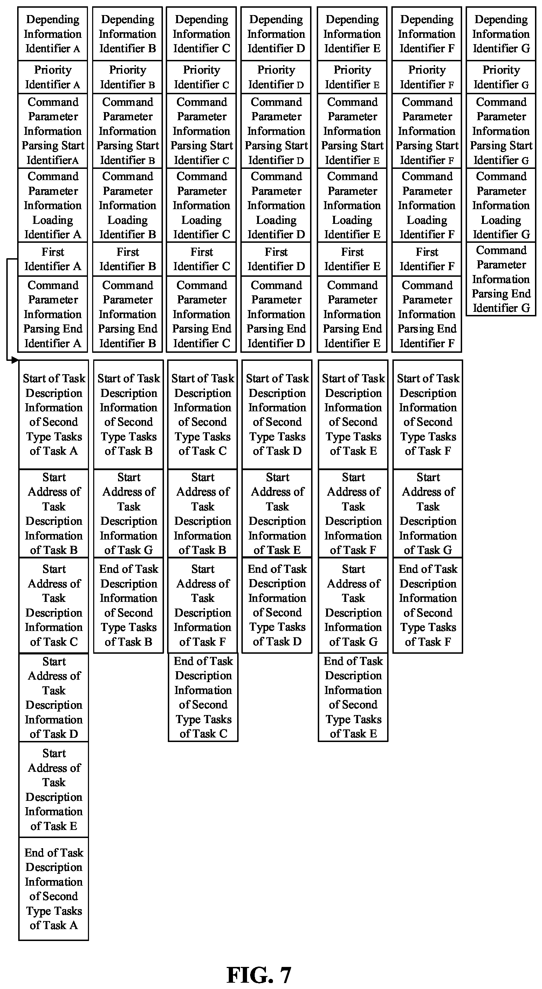

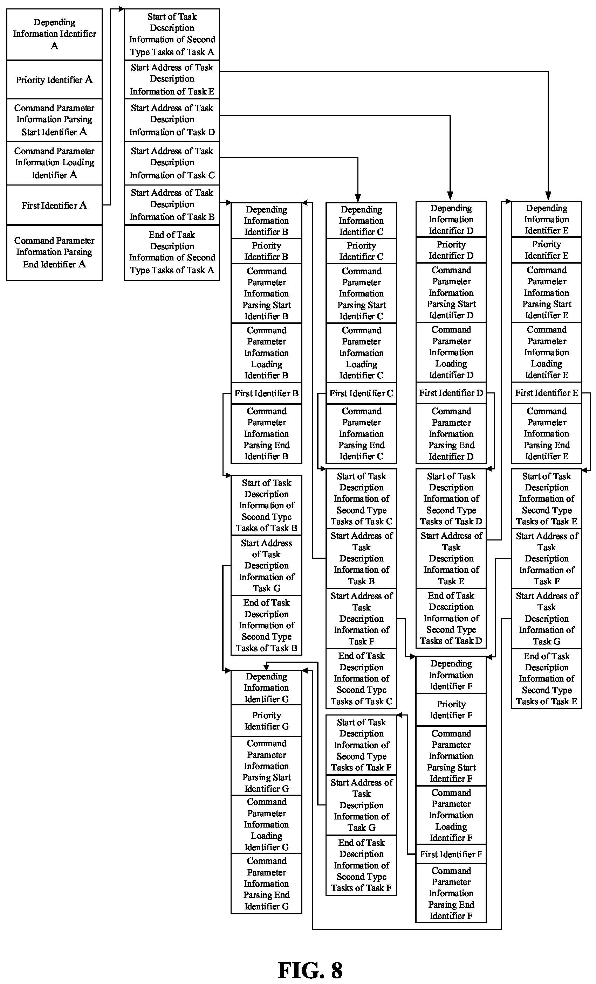

Based on the above exemplary task description information, the task description information of each task A to G in the task diagram shown in FIG. 3 may be schematically represented as FIG. 7. For example, the second type tasks associated with task A include task B, task C, task D and task E. The depended information identifier in the task description information of task A includes a first identifier and a second identifier, and the second identifier includes the start addresses of the task description information of task B, task C, task D and task E. In the task diagram shown in FIG. 3, there is no second type task associated with task G. Therefore, the task description information of task G shown in FIG. 7 does not include a depended information identifier. Accordingly, based on the definition of the task description information of each task shown in FIG. 7, the task diagram including tasks A to G as shown in FIG. 3 may be illustrated as FIG. 8. In FIG. 7 and FIG. 8, the identifiers or information in the task description information of each task include the corresponding task codes A to G, so as to distinguish the task description information of different tasks.

As described above, each task may include task instruction information for indicating specific operation content of the task. Here, examples of the specific operation content include, but are not limited to, computing formulas, functions, or the like. The task description information of each task further includes command parameter information, and the command parameter information represents a condition required for initiating and executing task instruction information of the task.

In some embodiments, the above operation S440, that is, the operation of executing the to-be-executed task in the to-be-executed task queue, includes the following operations. In operation S440a, command parameter information in the task description information of the to-be-executed task is obtained according to the start address information of the task description information of the to-be-executed task. In operation S440b, the command parameter information of the to-be-executed task is stored into a second memory, to parse the command parameter information of the to-be-executed task. The second memory may obtain the command parameter information in the task description information of the to-be-executed task based on the start address information of the task description information of the to-be-executed task, and store the command parameter information of the to-be-executed task. The command parameter information in the second memory may be read by a command parameter information parsing apparatus in the device for parsing the command parameter information.

According to another embodiment of the disclosure, the above operation S440a, that is, the operation of obtaining the command parameter information in the task description information of the to-be-executed task according to the start address information of the task description information of the to-be-executed task, includes the following operation. In response to the first memory storing start address information of task description information of at least one to-be-executed task and available space exists in the second memory, command parameter information in the task description information of the at least one to-be-executed task is obtained according to the start address information of the task description information of the at least one to-be-executed task. The above operation S440b, that is, the operation of storing the command parameter information of the to-be-executed task into the second memory, to parse the command parameter information of the to-be-executed task, includes the following operation. The command parameter information of the at least one to-be-executed task is stored into the second memory, to parse the command parameter information of the at least one to-be-executed task. In the embodiment, as long as the start address information of the task description information of the to-be-executed task is stored in the first memory and available space exists in the second memory, the second memory stores the command parameter information in the task description information of the to-be-executed task. Therefore, the second memory may store the command parameter information in the task description information of multiple to-be-executed tasks. For example, referring to FIG. 3 and FIG. 6 again, the second memory may store the command parameter information in the task description information of task C and task D at the same time when task C and task D are determined as to-be-executed tasks. At this time, the command parameter information parsing apparatus of the device may parse the command parameter information in the task description information of the two tasks, and the device may execute the task instruction information of task C and task D in parallel as long as the device has available computing resources. Furthermore, in the case where the task description information of each task further includes the task priority identifier, when the device executes a specific operation indicated by the task instruction information of a task with a higher priority in the to-be-executed task queue, the command parameter information parsing apparatus may parse the command parameter information of a task with a lower priority in the to-be-executed task queue. Therefore, in the embodiment, the hardware resources of the device may be more fully utilized, thereby further improving the speed and efficiency of processing multiple tasks.

According to another embodiment of the disclosure, in the case where the task description information of the task includes the task priority identifier, the above operation S440, that is, the operation of executing to-be-executed task in the to-be-executed task queue, includes the following operations. In operation S440a, a high priority to-be-executed task with a highest priority is determined from the to-be-executed task queue based on a priority identifier of the to-be-executed task. In operation S440b, command parameter information in task description information of the high priority to-be-executed execution task is obtained based on start address information of the task description information of the high priority to-be-executed execution task. In operation S440c, the command parameter information in the task description information of the high priority to-be-executed task is stored into a second memory, to parse the command parameter information in the task description information of the high priority to-be-executed task. In this way, each to-be-executed task in the to-be-executed task queue may be executed based on the priority of each to-be-executed task in the to-be-executed task queue.

In another embodiment, the above operation S440, that is, the operation of executing to-be-executed task in the to-be-executed task queue, includes the following operations. In operation S4401, a high priority to-be-executed task with a highest priority is determined from the to-be-executed task queue based on a priority identifier of the to-be-executed task. In operation S4402, a task priority identifier of the high priority to-be-executed task is compared with a task priority identifier of another task other than the to-be-executed task queue. In operation S4403, in response to a priority of the high priority to-be-executed task being higher than a priority of the another task, command parameter information in task description information of the high priority to-be-executed task is stored into a second memory, to parse the command parameter information in the task description information of the high priority to-be-executed task. In some cases, the device may not receive the task description information of each of the multiple tasks at the same time, but rather the host sends the multiple tasks to the device in batches. The above another task may be a task sent relatively later among the multiple tasks sent by the host in batches, and the above another task may be a task in a certain task diagram or a task independent of task diagrams. In the case where a high priority to-be-executed task with the highest priority in the to-be-executed task queue has a higher priority than the above another task, the high priority to-be-executed task is executed first. In some embodiments, the above operation S440, that is, the operation of executing the to-be-executed task in the to-be-executed task queue, further includes the following operation. In response to the priority of the high priority to-be-executed task being higher than the priority of the another task and a depending information identifier in task description information of the another task indicating that a number of first type tasks associated with the another task is zero, start address information of the task description information of the another task is stored into the first memory. That is, if the another task does not depend on other tasks but has a lower priority, the another task may be added to the to-be-executed task queue, in this way, the another task may be executed based on the priority of the another task and the priority of the present to-be-executed task in the to-be-executed task queue.

In some embodiments, the above operation S440, that is, the operation of executing the to-be-executed task in the to-be-executed task queue, may further include the following operation. In operation S4404, in response to the priority of the high priority to-be-executed task being lower than the priority of the another task and a depending information identifier in task description information of the another task indicating that a number of first type tasks associated with the another task is zero, command parameter information of the task description information of the another task is stored into the second memory, to parse the command parameter information of the task description information of the another task. That is, in the case where the priority of the another task is higher than that of the above high priority to-be-executed task in the to-be-executed task queue, and the another task does not directly depend on other tasks, the another task is executed first. It can be understood that in the case where the depending information identifier in the task description information of the above another task indicates that a number of first type tasks associated with the another task is not zero, it is necessary to wait for the execution of the first type tasks associated with the another task, and the value of the depending information identifier in the task description information of the above another task is updated with the end of the execution of the first type tasks associated with the another task.

In summary, in the method for processing multiple tasks provided by another embodiment of the disclosure, the task description information of each task includes a depending information identifier (indicating a number of the first type tasks associated with the task), a depended information identifier (indicating second type tasks associated with the task), and a task priority identifier. Furthermore, the depending information identifier of the second type task associated with the current task is updated with the end of the execution of the current task, and thus to-be-executed tasks that do not directly depend on any task may be dynamically determined from the second type tasks associated with the current task. In other words, for any one of the multiple tasks, at the end of the execution of the task, it may be determined whether tasks, which have been completely released from direct dependencies on other tasks, exist in the second type tasks associated with the task, and the tasks may be determined as to-be-executed tasks. The to-be-executed tasks may be executed based on the task priority identifier of each to-be-executed task, but it is not necessary to require that the start of the execution of one of the tasks has to wait for the end of the execution of another task, as in the conventional method for processing tasks.

Therefore, according to an embodiment of the disclosure, the operation of executing the to-be-executed task in the to-be-executed task queue may include the following operation. In response to the processing device for performing the method having available computing resources for executing tasks, at least one to-be-executed task is obtained from the to-be-executed task queue, and the at least one to-be-executed task is allocated to the available computing resource.

It can be understood that the above multiple tasks may belong to the same task diagram, that is, each of the multiple tasks have direct or indirect dependencies. For example, as shown in FIG. 3, the final task of the multiple tasks is required to depend on the execution results of previous tasks. Alternatively, multiple tasks may form more than two task diagrams which are independent of each other. Thus, in some embodiments, the multiple tasks includes two task sets. Tasks in one of the two task sets have dependencies that form a first task diagram, tasks in another one of the two task sets have dependencies that form a second task diagram, and the first task diagram is independent from the second task diagram. That is, there is no association between the tasks in the first task diagram and the tasks in the second task diagram. By applying the method provided by the above embodiment of the disclosure to process the multiple tasks, parallel processing on tasks in multiple task diagrams which are not associated with each other may be realized, and the efficiency of processing tasks may be greatly improved.

Another embodiment of the disclosure provides a processing device for processing multiple tasks. The processing device may be any one of a Digital Signal Processor, a Graphics Processing Unit, a Field Programmable Gate Array, or a Neural Network Processor. Similar to the above embodiments, each of the multiple tasks includes task description information, the task description information includes a depending information identifier and a depended information identifier, the depending information identifier indicates a number of first type tasks associated with the task in the multiple tasks, the depended information identifier indicates at least whether second type tasks associated with the task exist in the multiple tasks, execution of the task directly depends on the first type task, and execution of the second type task directly depends on the task. The processing device includes a to-be-executed task determination unit and a to-be-executed task queue storage unit. The to-be-executed task determination unit is configured to update, in response to an end of the execution of each of the multiple tasks, a depending information identifier of the second type task associated with the task based on a depended information identifier of the task, to determine a to-be-executed task, which does not directly depend on any of the multiple tasks, from the second type tasks associated with the task based on the updated depending information identifier. The to-be-executed task queue storage unit is configured to store a to-be-executed task queue. Different from the conventional processing device, the processing device provided by embodiments of the disclosure includes the to-be-executed task determination unit and the to-be-executed task queue storage unit as described above. The to-be-executed task determination unit may determine a to-be-executed task, which does not directly depend on any of the multiple tasks, from the second type tasks associated with the current task, and store the related information of each of the determined to-be-executed tasks in the to-be-executed task queue storage unit. Therefore, depending on the actual condition of the computing resources of the device, the device may perform a parallel processing on at least a portion or even all of the to-be-executed tasks in the to-be-executed task queue which do not directly depend on any task, thereby reducing the amount of computing resources in an idle state in the device, enabling efficient utilization of the computing resources of the device, and improving the speed and efficiency of processing multiple tasks.

The to-be-executed task determination unit may include an adder or a subtractor. The adder or the subtractor is configured to change, in response to the end of the execution of the task, a value of the depending information identifier of each of the second type tasks associated with the task by a same amount, to obtain an updated depending information identifier of each of the second type tasks associated with the task. The to-be-executed task determination unit is configured to determine a second type task as the to-be-executed task, herein the updated depending information identifier of the second type task indicates that a number of first type tasks associated with the second type task is zero.

In some embodiments, the to-be-executed task queue storage unit includes a first-in-first-out memory. The to-be-executed task determination unit is configured to send start address information of task description information of the to-be-executed task to the first-in-first-out memory in case of determining the to-be-executed task. In other embodiments, the task description information of the task further includes a task priority identifier. The to-be-executed task queue storage unit includes a first storage unit. The to-be-executed task determination unit is configured to send start address information of task description information of the to-be-executed task and a task priority identifier of the to-be-executed task to the first storage unit in case of determining the to-be-executed task. The first storage unit may be any type of buffer.

As described above, each of the multiple tasks may further include task instruction information for indicating specific operation content of the task. The task description information of each of the multiple tasks further includes command parameter information, the command parameter information represents a condition required for initiating and executing task instruction information of the task. The to-be-executed task queue storage unit further includes a second storage unit. The second storage unit is configured to store command parameter information of the to-be-executed task, to parse the command parameter information of the to-be-executed task.

In the case where the task description information of the task includes the task priority identifier, the to-be-executed task queue storage unit further includes a first priority determination unit. The first priority determination unit is configured to determine a high priority to-be-executed task with a highest priority from the to-be-executed task queue based on a priority identifier of the to-be-executed task. The second storage unit is configured to store, in response to the first priority determination unit determining the high priority to-be-executed task, command parameter information in task description information of the high priority to-be-executed task, to parse the command parameter information in the task description information of the high priority to-be-executed task. In some embodiments, the processing device includes a second priority determination unit. The second priority determination unit is configured to compare a task priority identifier of the high priority to-be-executed task with a task priority identifier of another task other than the to-be-executed task queue. The second storage unit is configured to store, in response to a priority of the high priority to-be-executed task being higher than a priority of the another task, the command parameter information in the task description information of the high priority to-be-executed task, to parse the command parameter information in the task description information of the high priority to-be-executed task.

In some embodiments, the first storage unit is further configured to store, in response to the priority of the high priority to-be-executed task being higher than the priority of the another task and a depending information identifier in task description information of the another task indicating that a number of first type tasks associated with the another task is zero, start address information of the task description information of the another task. The second storage unit is further configured to store, in response to the priority of the high priority to-be-executed task being lower than the priority of the another task and a depending information identifier in task description information of the another task indicating that a number of first type tasks associated with the another task is zero, command parameter information of the task description information of the another task, to parse the command parameter information of the task description information of the another task. In some embodiments, the processing device further includes a third storage unit. The third storage unit is configured to store task description information of the second type task associated with the task.

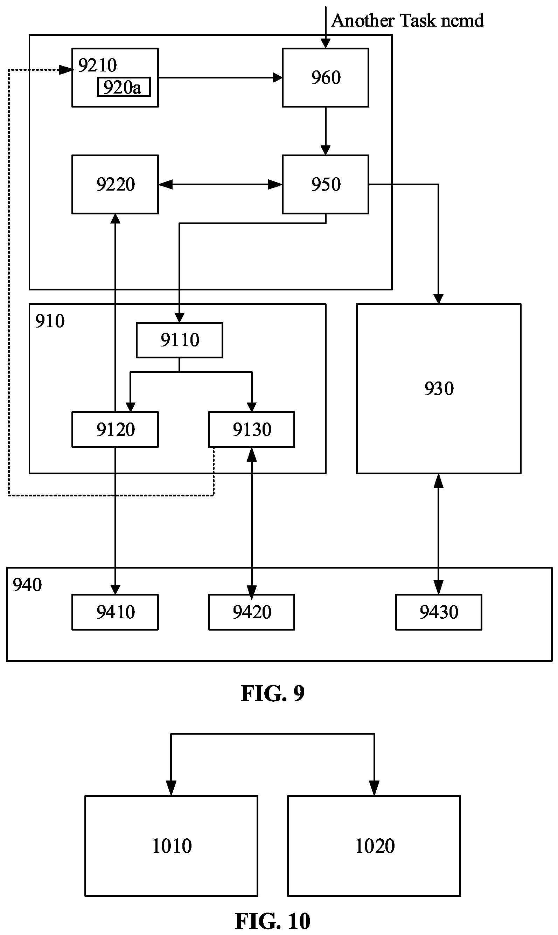

FIG. 9 illustrates a structure block diagram of a processing device according to an embodiment of the disclosure. As shown in FIG. 9, the processing device includes a to-be-executed task determination unit 9130, a task execution unit 930, a device memory 940, a first storage unit 9210, a second storage unit 9220, a command parameter information parsing unit 950, a first priority determination unit 920a, and a second priority determination unit 960. The device memory 940 includes a third storage unit 9420, a task description information storage unit 9410, and a task instruction information storage unit 9430. FIG. 9 further illustrates an addressing unit 9110 and a command parameter information loading unit 9120. The execution of the task instruction information of each task and parsing the command parameter information by the processing device are known to those skilled in the art and are not the focus of the technical solution of the disclosure, and thus will not be described in detail here.

The device memory 940 may store the task description information, the task instruction information, the data required for completing the operation indicated by the task instruction information, the result obtained after completing the operation indicated by the task instruction information, or the like, of each task, which is obtained or received from the host. For example, the task description information of the tasks that have not depended on any other task before processing (for example, the task A shown in FIG. 3 or FIG. 8) may be stored in the task description information storage unit 9410, the task instruction information and the data required for completing the operation indicated by the task instruction information may be stored in the task instruction information storage unit 9430, and the task description information of the tasks which can only be executed depending on the execution results of other tasks may be stored in the third storage unit 9420. In the following, the working process of the processing device is illustrated by an example where the task diagram shown in FIG. 8 or FIG. 3 is executed by the processing device shown in FIG. 9.

When the processing device obtains or receives task A, since task A is the starting task of the task diagram and does not depend on any other task, the second priority determination unit 960 determines that task A is to be executed first. The command parameter information parsing unit 950 indicates the addressing unit 9110 and the command parameter information loading unit 9120 to obtain the command parameter information of task A from the task description information storage unit 9410, the command parameter information loading unit 9120 sends the command parameter information of task A to the second storage unit 9220, and the command parameter information parsing unit 950 parses the command parameter information of task A stored in the second storage unit 9220. Based on the parsing result of the command parameter information parsing unit 950, the task execution unit 930 utilizes the corresponding computing resources of the processing device (For example, an ALU) to complete the operation indicated by the task instruction information of task A stored in the task instruction information storage unit 9430. At the end of the execution of task A, the to-be-executed task determination unit 9130 may obtain the address information of the second type tasks B, C, D and E associated with task A from the addressing unit 9110, and update the depending information identifiers of task B, C, D and E stored in the third storage unit 9420. For example, as previously discussed with respect to the embodiment of FIG. 3, the initial values of the depending information identifiers in the task description information of tasks B, C, D and E are -2, -1, -1, and -2, respectively. At the end of the execution of task A, an add one operation is performed on the initial values of the depending information identifiers of tasks B, C, D and E, respectively, thereby determining tasks C and D as to-be-executed tasks that do not directly depend on any task. The to-be-executed task determination unit 9130 may obtain related information of the to-be-executed tasks C and D determined by the to-be-executed task determination unit (for example, the start address of the task description information and the priority identifier) from the third storage unit 9420, and store the information to the first storage unit 9210. At this time, the to-be-executed task queue includes to-be-executed task C and to-be-executed task D. The first priority determination unit 920 determines a high priority to-be-executed task with the highest priority (for example, task C) from task C and task D based on the priority identifiers of task C and task D. In the case where the processing device does not obtain or receive another task, the command parameter information in the task description information of the high priority to-be-executed task C will be loaded by the command parameter information loading unit 9120 into the second storage unit 9220 to be parsed by the command parameter information parsing unit 950, and then the task execution unit 930 completes the operation indicated by the task instruction information of the high priority to-be-executed task C. Different from the conventional processing device, in the process of the task execution unit 930 completing the operation indicated by the task instruction information of the high priority to-be-executed task C, as long as the task execution unit 930 still has available computing resources, the command parameter information parsing unit 950 may complete the parsing of the command parameter information of the other task D among to-be-executed task C and to-be-executed task D, and allocate other computing resources for task D, such that task C and task D may be executed in parallel without having to wait for the end of the execution of task C before executing task D. Thus, the processing device provided by embodiments of the disclosure may perform a parallel processing on at least a portion or even all of the to-be-executed tasks in the to-be-executed task queue which do not directly depend on any task, thereby reducing the amount of computing resources in an idle state in the device, enabling efficient utilization of the computing resources of the device, and improving the speed and efficiency of processing multiple tasks.

As shown in FIG. 9, in some cases where the processing device obtains another task ncmd from the host in the process of processing a task, the second priority determination unit 960 compares the priority of the another task ncmd with the high priority to-be-executed task output by the first priority determination unit 920a. In the case where the priority of the high priority to-be-executed task is higher than the priority of the another task, the processing device prioritizes the execution of the high priority to-be-executed task output by the first priority determination unit 920a. That is, the second storage unit 9220 stores the command parameter information in the task description information of the high priority to-be-executed task, to parse the command parameter information in the task description information of the high priority to-be-executed task. In the case where the priority of the high priority to-be-executed task is higher than the priority of the another task and the depending information identifier in the task description information of the another task indicates that the number of first type tasks associated with the another task is zero, the another task may be added to the to-be-executed task queue, and the first storage unit 9210 may store, for example, the start address information of the task description information and the priority identifier of the another task. In the case where the priority of the high priority to-be-executed task is lower than the priority of the another task and the depending information identifier in the task description information of the another task indicates that the number of first type tasks associated with the another task is zero, the processing device executes the another task ncmd. That is, the second storage unit 9220 stores the command parameter information of the task description information of the another task ncmd, to parse the command parameter information of the task description information of the another task ncmd.

As described above, the to-be-executed task determination unit 910 may include an adder or a subtractor. The adder or subtractor here includes an arithmetic circuit capable of realizing an addition or subtraction function. Of course, it can be understood that in some embodiments, the subtraction function may also be realized based on an addition circuit. For example, the addition circuit may receive a negative number for an addition operation while actually realizing a subtraction function. For example, as discussed above with respect to the embodiment of FIG. 3, the initial values of the depending information identifiers in the task description information of tasks B, C, D and E may all be positive,. At the end of the execution of task A, an addition operation of adding with a negative number is performed on the initial values of the depending information identifiers of tasks B, C, D and E, respectively, to realize the function of a subtractor.

The first priority determination unit 920a and the second priority determination unit 960 shown in FIG. 9 may include a comparison circuit respectively. The comparison circuit determines a high or low priority of different tasks based on the values of the priority identifiers in the task description information of the different tasks. In FIG. 9, the first priority determination unit 920a is illustrated as being implemented inside the first storage unit 9210, alternatively, the first priority determination unit 920a may also be implemented outside the first storage unit 9210. In the case where the task description information of each task does not include the priority identifier, the processing device may not include the first priority determination unit 920a and the second priority determination unit 960, and in such case, the first storage unit 9210 may be implemented as a first-in-first-out memory FIFO.

According to embodiments of the disclosure, as long as the second storage unit 9220 has available space, the command parameter information of the to-be-executed tasks in the to-be-executed task queue indicated by the first storage unit 9210 may be obtained from the device memory 940 via the command parameter information loading unit 9210. That is, the second storage unit 9220 may store the command parameter information of multiple to-be-executed tasks, and the command parameter information parsing unit 950 may parse the command parameter information of the multiple to-be-executed tasks. The task instruction information of the multiple to-be-executed tasks may be executed in parallel as long as the task execution unit 930 has available computing resources. Therefore, the hardware resources of the processing device are efficiently utilized, which further improves the speed and efficiency of processing multiple tasks.

As discussed above, the above multiple tasks may belong to the same task diagram, or, multiple tasks may form more than two task diagrams which are independent of each other. Therefore, the processing device provided by embodiments of the disclosure may also realize parallel processing on tasks in multiple task diagrams which are not associated with each other, thereby greatly improving the efficiency of processing tasks.

Another embodiment of the disclosure provides a computer storage medium having stored thereon computer-executable instructions that when executed by a processor, implement the above method for processing multiple tasks.

Another embodiment of the disclosure provides a computer program including computer-readable codes, and when the computer-readable codes are running in an electronic device, a processor in the electronic device implements the above method for processing multiple tasks.

Another embodiment of the disclosure provides a heterogeneous computing system including a first processing device and a second processing device. The first processing device and the second processing device cooperate with each other to process multiple tasks. Each of the multiple tasks includes task description information, the task description information includes a depending information identifier and a depended information identifier, the depending information identifier indicates a number of first type tasks associated with the task in the multiple tasks, the depended information identifier indicates at least whether second type tasks associated with the task exist in the multiple tasks, execution of the task directly depends on the first type task, and execution of the second type task directly depends on the task. The first processing device is configured to send the multiple tasks to the second processing device, to cause the second processing device to execute the multiple tasks. The second processing device includes a to-be-executed task determination unit, a to-be-executed task queue storage unit and a task execution unit. The to-be-executed task determination unit is configured to update, in response to an end of the execution of each of the multiple tasks, a depending information identifier of the second type task associated with the task based on a depended information identifier of the task, to determine a to-be-executed task, which does not directly depend on any of the multiple tasks, from the second type tasks associated with the task based on the updated depending information identifier. The to-be-executed task queue storage unit is configured to store a to-be-executed task queue. The task execution unit is configured to execute a to-be-executed task in the to-be-executed task queue. In other words, the first processing device in the heterogeneous computing system may transmit or send task information of multiple tasks to the second processing device, and the second processing device in the heterogeneous computing system executes operations S410, S420, S430 and S440 of the method for processing multiple tasks as shown in FIG. 4.

FIG. 10 schematically illustrates an example of a heterogeneous computing system. A first processing device 1010 in the heterogeneous computing system includes a Central Processing Unit (CPU), and a second processing device 1020 may be the processing device as shown in FIG. 9. The second processing device may include at least one of a Digital Signal Processor, a Graphics Processing Unit, a Field Programmable Gate Array, or a Neural Network Processor.

The technical solution of the disclosure has been described above in combination with some embodiments, but the scope of protection of the disclosure is not limited to the particular form of the embodiments set forth herein, and the scope of the disclosure is defined by the claims.

### INDUSTRIAL APPLICABILITY

Embodiments of the disclosure relate to the field of computer technologies, and disclose a method for processing multiple tasks, a processing device, and a heterogeneous computing system. The method includes the following operations. Task description information of a task is obtained, herein the task description information includes a depending information identifier and a depended information identifier, the depending information identifier indicates a number of first type tasks associated with the task, the depended information identifier indicates at least whether second type tasks associated with the task exist in multiple tasks. In response to an end of the execution of the task, a depending information identifier of the second type task associated with the task is updated, to determine a to-be-executed task, which does not directly depend on any one of the multiple tasks, from the second type tasks associated with the task. The to-be-executed task is added to a to-be-executed task queue. The to-be-executed task in the to-be-executed task queue is executed. By applying the method to process multiple tasks, utilization of the hardware resources of the device in the heterogeneous computing system may be improved, and overall task execution efficiency may be improved.

## Claims

1. A method for processing a plurality of tasks, applied to a processing device, wherein the method comprises:
obtaining task description information of each of the plurality of tasks, wherein the task description information comprises a depending information identifier and a depended information identifier, the depending information identifier indicates a number of first type tasks, which are associated with the task, of the plurality of tasks, the depended information identifier indicates at least whether second type tasks associated with the task exist in the plurality of tasks, execution of the task directly depends on the first type tasks, and execution of the second type tasks directly depends on the task;
updating, in response to an end of the execution of the task, depending information identifiers of the second type tasks associated with the task based on a depended information identifier of the task, to determine a to-be-executed task, which does not directly depend on any one of the plurality of tasks, from the second type tasks associated with the task based on the updated depending information identifiers;
adding the to-be-executed task into a to-be-executed task queue; and
executing the to-be-executed task in the to-be-executed task queue.

2. The method of claim 1, further comprising: adding, in response to the obtained plurality of tasks comprising a non-dependent task, the non-dependent task to the to-be-executed task queue, wherein a depending information identifier of the non-dependent task indicates that a number of first type tasks associated with the non-dependent task is zero.

3. The method of claim 1, wherein the updating, in response to the end of the execution of the task, the depending information identifiers of the second type tasks associated with the task based on the depended information identifier of the task, to determine the to-be-executed task, which does not directly depend on any one of the plurality of tasks, from the second type tasks associated with the task based on the updated depending information identifier comprising:
changing, in response to the end of the execution of the task, a value of the depending information identifier of each of the second type tasks associated with the task by a same amount, to obtain an updated depending information identifier of each of the second type tasks associated with the task; and
determining a second type task of the second type tasks as the to-be-executed task, wherein the updated depending information identifier of the second type task indicates that a number of first type tasks associated with the second type task is zero.

4. The method of claim 1, wherein the adding the to-be-executed task to the to-be-executed task queue comprises:
storing start address information of task description information of the to-be-executed task into a first-in-first-out memory, to form the to-be-executed task queue.

5. The method of claim 1, wherein the task description information further comprises a task priority identifier, and the adding the to-be-executed task to the to-be-executed task queue comprises:
storing start address information of task description information of the to-be-executed task and a task priority identifier of the to-be-executed task into a first memory, to form the to-be-executed task queue.

6. The method of claim 5, wherein each of the plurality of tasks further comprises task instruction information for indicating specific operation content of the task, the task description information further comprises command parameter information, the command parameter information represents a condition required for initiating and executing task instruction information of the task; and the executing the to-be-executed task in the to-be-executed task queue comprises:
obtaining command parameter information in the task description information of the to-be-executed task according to the start address information of the task description information of the to-be-executed task; and
storing the command parameter information of the to-be-executed task into a second memory, to parse the command parameter information of the to-be-executed task.

7. The method of claim 6, wherein the obtaining the command parameter information in the task description information of the to-be-executed task according to the start address information of the task description information of the to-be-executed task comprises:
obtaining, in response to the first memory storing start address information of task description information of at least one to-be-executed task and available space existing in the second memory, command parameter information in the task description information of the at least one to-be-executed task according to the start address information of the task description information of the at least one to-be-executed task;
wherein the storing the command parameter information of the to-be-executed task into the second memory, to parse the command parameter information of the to-be-executed task comprises:
storing the command parameter information of the at least one to-be-executed task into the second memory, to parse the command parameter information of the at least one to-be-executed task.

8. The method of claim 5, wherein each of the plurality of tasks further comprises task instruction information for indicating specific operation content of the task, the task description information further comprises command parameter information, the command parameter information represents a condition required for initiating and executing task instruction information of the task; and the executing to-be-executed task in the to-be-executed task queue comprises:
determining a high priority to-be-executed task with a highest priority from the to-be-executed task queue based on a priority identifier of the to-be-executed task;
obtaining command parameter information in task description information of the high priority to-be-executed execution task based on start address information of the task description information of the high priority to-be-executed execution task; and
storing the command parameter information in the task description information of the high priority to-be-executed task into a second memory, to parse the command parameter information in the task description information of the high priority to-be-executed task.

9. The method of claim 5, wherein each of the plurality of tasks further comprises task instruction information for indicating specific operation content of the task, the task description information further comprises command parameter information, the command parameter information represents a condition required for initiating and executing task instruction information of the task; and the executing to-be-executed task in the to-be-executed task queue comprises:
determining a high priority to-be-executed task with a highest priority from the to-be-executed task queue based on a priority identifier of the to-be-executed task;
comparing a task priority identifier of the high priority to-be-executed task with a task priority identifier of another task other than the to-be-executed task queue; and
storing, in response to a priority of the high priority to-be-executed task being higher than a priority of the another task, command parameter information in task description information of the high priority to-be-executed task into a second memory, to parse the command parameter information in the task description information of the high priority to-be-executed task.

10. The method of claim 9, wherein the executing the to-be-executed task in the to-be-executed task queue further comprises:
storing, in response to the priority of the high priority to-be-executed task being higher than the priority of the another task and a depending information identifier in task description information of the another task indicating that a number of first type tasks associated with the another task is zero, start address information of the task description information of the another task into the first memory.

11. The method of claim 9, wherein the executing the to-be-executed task in the to-be-executed task queue further comprises:
storing, in response to the priority of the high priority to-be-executed task being lower than the priority of the another task and a depending information identifier in task description information of the another task indicating that a number of first type tasks associated with the another task is zero, command parameter information of the task description information of the another task into the second memory, to parse the command parameter information of the task description information of the another task.

12. The method of claim 1, wherein the executing the to-be-executed task in the to-be-executed task queue comprises:
obtaining, in response to the processing device having available computing resources for executing tasks, at least one to-be-executed task from the to-be-executed task queue, and allocating the at least one to-be-executed task to the available computing resource.

13. The method of claim 1, wherein the plurality of tasks comprises two task sets, tasks in one of the two task sets have dependencies that form a first task diagram, tasks in another one of the two task sets have dependencies that form a second task diagram, and the first task diagram is independent from the second task diagram.

14. The method of claim 1, wherein the depended information identifier comprises a first identifier and a second identifier, the first identifier indicates whether the second type tasks associated with the task exist in the plurality of tasks, and the second identifier indicates start address information of task description information of the second type tasks associated with the task.

15. A processing device for processing a plurality of tasks, wherein each of the plurality of tasks comprises task description information, the task description information comprises a depending information identifier and a depended information identifier, the depending information identifier indicates a number of first type tasks, that are associated with the task, of the plurality of tasks, the depended information identifier indicates at least whether second type tasks associated with the task exist in the plurality of tasks, execution of the task directly depends on the first type tasks, and execution of the second type tasks directly depends on the task;
wherein the processing device comprises:
a to-be-executed task determination unit, configured to update, in response to an end of the execution of each of the plurality of tasks, a depending information identifier of the second type task associated with the task based on a depended information identifier of the task, to determine a to-be-executed task, which does not directly depend on any of the plurality of tasks, from the second type tasks associated with the task based on the updated depending information identifier;
a to-be-executed task queue storage unit, configured to store a to-be-executed task queue; and
a task execution unit, configured to execute a to-be-executed task in the to-be-executed task queue.

16. The processing device of claim 15, wherein the to-be-executed task determination unit comprises an adder or a subtractor, configured to change, in response to the end of the execution of the task, a value of the depending information identifier of each of the second type tasks associated with the task by a same amount, to obtain an updated depending information identifier of each of the second type tasks associated with the task; and
the to-be-executed task determination unit is configured to determine a second type task of the second type tasks as the to-be-executed task, wherein the updated depending information identifier of the second type task indicates that a number of first type tasks associated with the second type task is zero.

17. The processing device of claim 15, wherein the to-be-executed task queue storage unit comprises a first-in-first-out memory, and the to-be-executed task determination unit is configured to send start address information of task description information of the to-be-executed task to the first-in-first-out memory when determining the to-be-executed task.

18. The processing device of claim 15, wherein the task description information further comprises a task priority identifier, the to-be-executed task queue storage unit comprises a first storage unit, and the to-be-executed task determination unit is configured to send start address information of task description information of the to-be-executed task and a task priority identifier of the to-be-executed task to the first storage unit when determining the to-be-executed task.

19. The processing device of claim 18, wherein each of the plurality of tasks further comprises task instruction information for indicating specific operation content of the task, the task description information of each of the plurality of tasks further comprises command parameter information, the command parameter information represents a condition required for initiating and executing task instruction information of the task;
wherein the to-be-executed task queue storage unit further comprises a second storage unit, configured to store command parameter information of the to-be-executed task, to parse the command parameter information of the to-be-executed task.

20. The processing device of claim 19, wherein the to-be-executed task queue storage unit further comprises a first priority determination unit, configured to determine a high priority to-be-executed task with a highest priority from the to-be-executed task queue based on a priority identifier of the to-be-executed task;
wherein the second storage unit is configured to store, in response to the first priority determination unit determining the high priority to-be-executed task, command parameter information in task description information of the high priority to-be-executed task, to parse the command parameter information in the task description information of the high priority to-be-executed task.

21. The processing device of claim 20, wherein the processing device comprises a second priority determination unit, configured to compare a task priority identifier of the high priority to-be-executed task with a task priority identifier of another task other than the to-be-executed task queue;
wherein the second storage unit is configured to store, in response to a priority of the high priority to-be-executed task being higher than a priority of the another task, the command parameter information in the task description information of the high priority to-be-executed task, to parse the command parameter information in the task description information of the high priority to-be-executed task.

22. The processing device of claim 21, wherein the first storage unit is further configured to store, in response to the priority of the high priority to-be-executed task being higher than the priority of the another task and a depending information identifier in task description information of the another task indicating that a number of first type tasks associated with the another task is zero, start address information of the task description information of the another task.

23. The processing device of claim 21, wherein the second storage unit is further configured to store, in response to the priority of the high priority to-be-executed task being lower than the priority of the another task and a depending information identifier in task description information of the another task indicating that a number of first type tasks associated with the another task is zero, command parameter information of the task description information of the another task, to parse the command parameter information of the task description information of the another task.

24. The processing device of claim 15, wherein the processing device further comprises a third storage unit, configured to store task description information of the second type tasks associated with the task.

25. A heterogeneous computing system, comprising a first processing device and a second processing device, wherein the first processing device and the second processing device cooperate with each other to process a plurality of tasks;
wherein each of the plurality of tasks comprises task description information, the task description information comprises a depending information identifier and a depended information identifier, the depending information identifier indicates a number of first type tasks, that are associated with the task, of the plurality of tasks, the depended information identifier indicates at least whether second type tasks associated with the task exist in the plurality of tasks, execution of the task directly depends on the first type tasks, and execution of the second type tasks directly depends on the task;
wherein the first processing device is configured to send the plurality of tasks to the second processing device, to cause the second processing device to execute the plurality of tasks, and the second processing device comprises:
a to-be-executed task determination unit, configured to update, in response to an end of the execution of each of the plurality of tasks, a depending information identifier of the second type tasks associated with the task based on a depended information identifier of the task, to determine a to-be-executed task, which does not directly depend on any of the plurality of tasks, from the second type tasks associated with the task based on the updated depending information identifier;
a to-be-executed task queue storage unit, configured to store a to-be-executed task queue; and
a task execution unit, configured to execute a to-be-executed task in the to-be-executed task queue.

26. The heterogeneous computing system of claim 25, wherein the first processing device comprises a Central Processing Unit, and the second processing device comprises at least one of a Digital Signal Processor, a Graphics Processing Unit, a Field Programmable Gate Array, or a Neural Network Processor.
